# EUROPEAN PATENT APPLICATION

(11) **EP 4 657 902 A1**
(43) Date of publication of application: **03.12.2025**
(21) Application number: 25179036.6
(22) Date of filing: 27.05.2025
(51) Int. Cl.: H04W 4/50, H04W 4/70

(54) **DYNAMIC CONFIGURATION OF AN IOT CONTROL APPLICATION TO SUPPORT NEW CONTROLLED DEVICE TYPE**

(30) Priority: 27.05.2024 US 202463652007 P; 27.08.2024 US 202418816484
(71) Applicant: Roku, Inc., San Jose, CA 95110 (US)
(72) Inventor: BLUNDELL, Paul, San Jose (US); BRECHTER, Stefan, San Jose (US); MENDIRATTA, Nishant, San Jose (US); SANTANGELI, Peter, San Jose (US); PABBATHI, Apoorva, San Jose (US)
(74) Representative: Latham, Stuart Alexander

(57) **Abstract**

A method and system for dynamically configuring an Internet of Things (IoT) control application of a first device to support controlling of a second device. An example method includes a computing system detecting that the second device has a device type that the IoT control application of the first device is not currently configured to support controlling. Further, the example method includes, responsive to at least the detecting, the computing system causing the IoT control application of the first device to be provisioned with a set of user interface (UI) elements associated with the device type, where the IoT control application of the first device being provisioned with the set of UI elements associated with the device type enables the IoT control application of the first device to support controlling of the second device.

## Description

### REFERENCE TO RELATED APPLICATION

This application claims priority to U.S. Provisional Patent Application No. 63/652,077, filed May 27, 2024, the entirety of which is hereby incorporated by reference.

### SUMMARY

A typical Internet of Things (IoT) ecosystem includes a number of IoT devices (i.e., physical "things"), typically nonstandard computing devices configured to carry out useful functions and arranged to connect wirelessly or otherwise with a network and engage in data communications with each other and with local or cloud-based IoT control applications (apps), among other possibilities.

There are countless examples of IoT devices. In the consumer space, for instance, examples include smart light switches, video doorbells, power outlets, thermostats, window treatment, lightbulbs, locks, cameras, security systems, wearable devices, and status indicators, among others. And in the commercial space, examples include smart vehicles, healthcare monitors and other equipment, power grids, environmental monitors, and agricultural equipment, among others.

In an example arrangement, a user (e.g., a person, a company, etc.) may own and/or operate an IoT ecosystem that includes a set of one or more IoT devices associated with the user. The devices in the user's IoT ecosystem may be compliant with an IoT framework that defines protocols for device operation and interaction. Further, the IoT ecosystem may include an IoT control subsystem that may help to govern devices in the ecosystem, such as monitoring and modifying operational state of and interaction between the devices.

The IoT control subsystem could be centralized and/or distributed. For instance, aspects of the control subsystem could be provided in a centralized hub or other controller device locally at the user's premises (e.g. home or office) and could be set to communicate with the various IoT devices through a local area network (LAN) or other arrangement. Alternatively or additionally, aspects of the control subsystem could be provided in a cloud-based system, possibly one operated by an IoT service provider to which the user subscribes, and could be set to communicate with the various IoT devices through a wide area network (WAN) and a LAN or other arrangement. Still alternatively or additionally, aspects of the control subsystem could be distributed among the IoT devices themselves. For instance, each of various devices in the IoT ecosystem could maintain a copy of control-subsystem data and operational logic, to facilitate device control.

The IoT control subsystem could include or have access to a device registry that identifies the devices within the user's IoT ecosystem and specifies for each device a set of associated metadata, such as device type and operational state (e.g., current on/off status, level, location, etc.) As the user acquires new IoT devices, the user may register the devices with the IoT control subsystem, which may result in adding the devices to the device registry. Further, as the operational state of devices in the ecosystem changes, associated signaling could be provided to the control subsystem to update the device registry accordingly.

In relation to the IoT framework, an IoT service provider may also provide the user with access to an IoT control application (app) that enables the user to control the IoT devices in the user's IoT ecosystem, such as to monitor and/or modify operational state of the IoT devices for instance. This IoT control app may function as part of the IoT control subsystem and may be configured to run on a mobile or stationary personal computing device such as a smartphone, tablet, wearable device, or laptop, and/or on another type of device, possibly one or more of the IoT devices themselves, or as a web app (e.g., rendered by a browser on the computing device), among other possibilities. As part of the IoT control subsystem, such an IoT control app may have access to the device registry noted above, to facilitate device control.

For instance, the IoT service provider may provide an IoT control app that the user could install on the user's computing device and could associate with the user's IoT ecosystem and particularly with the IoT control subsystem, and through which the user could then engage in this IoT device control. When a user first acquires one or more IoT devices compliant with a given IoT framework, the user may thus acquire and install such an IoT control app on the user's computing device.

The user's computing device may be configured to obtain such an app from an online application marketplace or app store that is operated by a third-party gatekeeper service. For instance, a company that provides the operating system of the user's computing device may run an online application marketplace configured specifically to interoperate with that operating system. Through an application-marketplace function on the user's computing device, the user may thus interact with the online application marketplace to select the IoT control app provided by an IoT service provider associated with the IoT framework and to download and install that IoT control app on the user's computing device.

Obtaining and installing the IoT control app may involve downloading a set of compiled program instructions, i.e., compiled code, that defines the IoT control app, and registering the downloaded IoT control app with the computing' device's operating system, so that the IoT control app could then be accessible to a user of the computing device through a computing device user interface (UI) such as a touch display screen or the like. Through this or another process, once the IoT control app is installed on the user's computing device, the user may then conveniently use the IoT control app on the user's computing device as a basis to control the user's IoT devices.

Among other functions, an example IoT control app may indicate the state of the IoT devices in the user's IoT ecosystem and may allow the user to interact with those IoT devices, such as to set up the IoT devices, change configuration of the IoT devices, manipulate inputs of the IoT devices, and/or view outputs of the IoT devices, among numerous other possibilities. To facilitate this or other IoT-device interaction, the IoT control app may provide a set of virtual controls, and an "administrative" perspective of the user's IoT ecosystem.

The example IoT control app may support and provide a UI that facilitates interaction with various IoT devices in the user's IoT ecosystem, whether those devices are physical devices and/or virtual devices (e.g., IoT control modules). Such a UI may provide the user with a menu of devices in the ecosystem, e.g., per the device registry, allowing the user to view and/or modify operational state of various devices. For instance, the UI may allow the user to select any device in the ecosystem and to control the selected device, by means of manipulating its inputs, viewing its outputs, and so forth. Where one-to-many relationships exist (such as with an IoT switch that may control multiple IoT lightbulbs) the UI may also enable the user to manage those relationships.

To facilitate this control, the IoT control app may be provisioned with UI elements and associated control logic respectively for each of various types of devices. For each device type, for instance, the IoT control app may be provisioned with a virtual representation such as an icon that illustrates the device type. (E.g., for an IoT lightbulb, a UI element may be a graphical representation of a lightbulb; for an IoT switch, a UI element may be a graphical representation of a switch; and for an IoT doorbell, a UI element may be a graphical representation of a doorbell.) Further, for an IoT device that has various operational states (e.g., on, off, level, etc.), the IoT control app may be provisioned with one or more virtual representations of a current state of the IoT device (e.g., a graphical slider or other indicator of on, off, or level state, etc.) In addition, the IoT control app may be provisioned with associated control logic, such as program instructions or the like, that may govern one or more associated UI elements possibly in relation to operational state of the device, such as how and when the UI elements may appear, what user input and output functions the UI elements may support, and so forth, to facilitate applicable IoT device control.

The example IoT control app may be configured by default to support controlling of just certain types of IoT devices. For instance, the IoT control app as initially installed on the user's computing device may be configured to support controlling of just lights, switches, and doorbells, among other possibilities. Thus, the IoT control app may be provisioned with applicable UI elements and associated control logic that is particular to these types of IoT devices. For instance, this may be part of the compiled code that gets installed initially on the user's computing device.

It would be desirable, however, for an IoT control app to also conveniently support new types IoT devices that get introduced into the user's IoT ecosystem, namely, new types of IoT devices that the IoT control app is not already configured to support controlling. This may include, for instance, new types of IoT devices developed and/or introduced by the IoT service provider or others, which may have new types of inputs, outputs, states, and/or other properties. For instance, if the IoT service provider develops or partners with a third party to make available a new IoT device type that the IoT control app was not previously configured to support, it would be desirable to update the IoT control app to support controlling of that new IoT device type.

Unfortunately, however, a technical problem with updating a typical IoT control app to support a newly introduced IoT device type is that the update process would need to involve the IoT service provider changing the IoT control app in the gatekeeper's online application marketplace and having the user's computing device then interact with the online application marketplace to download and install the updated set of compiled code defining the updated IoT control app. In some cases, it may take on the order of weeks for the online application marketplace to make the updated IoT control app available for download and installation. Further, updating the IoT control app on the user's computing device may also require the user to actively trigger the computing-device interaction with the online application marketplace.

The present disclosure provides a technical advance that may help to overcome this and other problems. In particular, the disclosure provides a mechanism that may enable an IoT control app to support newly added IoT devices, particularly new IoT device types that were not previously supported by the IoT control app, without necessarily updating the compiled code of the IoT control app. This mechanism may facilitate more real-time support of newly added IoT devices that the IoT control app did not already support. Further, the mechanism may also be able to configure, control, and view IoT devices even when not connected with the internet and therefore when unable to download new or updated code from an online application marketplace or the like.

In accordance with the present disclosure, when a user acquires a new IoT device of a type that is not currently supported by the IoT control app installed on the user's computing device, the IoT control app may learn of the newly added IoT device and may conveniently acquire or otherwise become provisioned with one or more new UI elements and associated control logic useable by the IoT control app to support controlling of the newly added IoT device type. For instance, the user's mobile device may wirelessly pair with the new IoT device and/or scan a codeword, QR code, or the like on the new IoT device to obtain an identifier of the new IoT device. The user's mobile device may then responsively obtain from the new IoT device itself and/or from a network server operated by the IoT service provider a set of metadata that will define the applicable UI elements and associated control logic.

In an example implementation, for instance, the IoT control app may acquire (e.g., from the newly introduced IoT device and/or from the IoT service provider) a JavaScript Object Notation (JSON) file or other structured set of metadata (e.g., extensible markup) that defines one or more UI elements and associated control logic particularly for the newly introduced IoT device. Based on the acquired metadata, the IoT control app may thereby become configured to use the newly acquired UI elements and associated control logic, in order to enable the user to use the IoT control app to control with the newly acquired IoT device.

Accordingly, in one respect, disclosed is an example method for dynamically configuring an IoT control application of a first device to support controlling of a second device. The example method involves a computing system (e.g., in the first device or other control entity) detecting that the second device has a device type that the IoT control application of the first device is not currently configured to support controlling. Further, the example method involves, responsive to at least the detecting, the computing system causing the IoT control application of the first device to be provisioned with a set of UI elements associated with the device type. The IoT control application of the first device thereby being provisioned with the set of UI elements associated with the device type enables the IoT control application of the first device to support controlling of the second device, e.g., by making use of the UI elements to facilitate user interaction with the IoT control application.

In another respect, disclosed is a computing system that includes at least one network communication interface, at least one processor, non-transitory data storage, and program instructions stored in the non-transitory data storage and executable by the at least one processor to carry out operations such as those noted above for dynamically configuring an IoT control application of a first device to support controlling of a second device.

In yet another respect, disclosed is non-transitory data storage (e.g., one or more data-storage components) having stored program instructions executable by at least one processor to carry out operations such as those noted above for dynamically configuring an IoT control application of a first device to support controlling of a second device.

These as well as other aspects, advantages and alternatives will become apparent from reading the following detailed description with reference where appropriate to the accompanying drawings. Further, it should be understood that the implementations described in this summary and in the following description and drawings are intended as examples only and that numerous variations could be possible.

### BRIEF DESCRIPTION OF THE DRAWINGS

Figure 1 is a simplified block diagram of an example system in which disclosed features can be implemented.
Figure 2 is a simplified block diagram of a user's smartphone as an example of an IoT control device running an IoT control app.
Figure 3 is a simplified block diagram of an example computing system.
Figure 4 is a flow chart illustrating an example method.
Figure 5 is another flow chart illustrating an example method.

### DETAILED DESCRIPTION

The present description will discuss example implementations in the context of an IoT ecosystem at a user's home and/or other site, with an IoT control app on the user's smartphone. It will be understood, however, that the disclosed principles could apply as well in other scenarios, such as where the IoT control app is provided on another device for instance.

Further, it will be understood that the disclosed arrangements and processes described herein could take various other forms. For instance, elements and operations could be re-ordered, distributed, replicated, combined, omitted, added, or otherwise modified. In addition, elements described as functional entities could be implemented as discrete or distributed components or in conjunction with other components/modules, and in any suitable combination and location. In addition, various operations described as being carried out by one or more entities could be implemented by and/or on behalf of those entities, through hardware, firmware, and/or software, such as by one or more processing units executing program instructions stored in memory, among other possibilities.

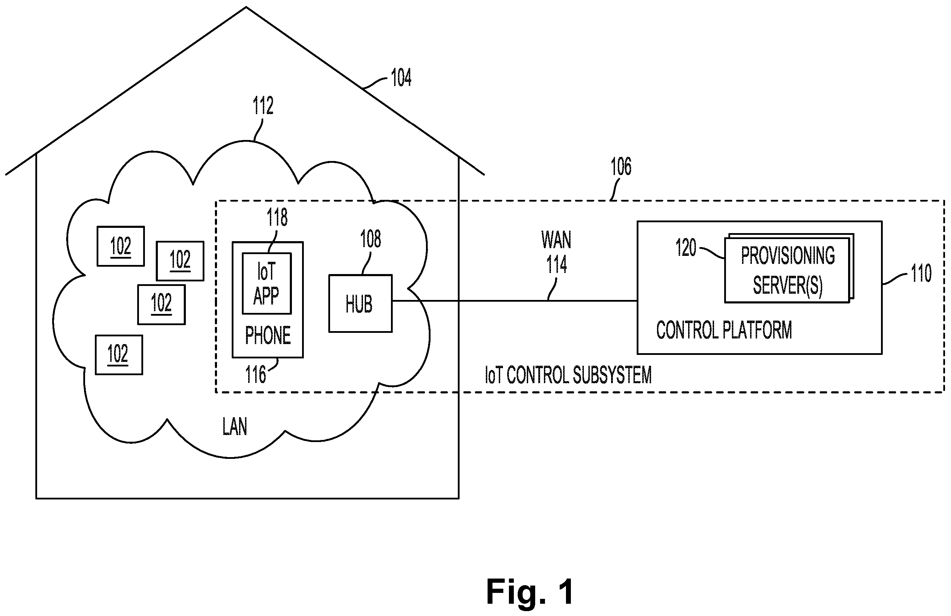

Referring to the drawings, as noted above, Figure 1 is a simplified block diagram illustrating an example system in which various disclosed features could be implemented. As shown in Figure 1, the example system comprises a user's IoT ecosystem including various IoT devices 102 at the user's home 104, and including an IoT control subsystem 106.

For illustrative purposes, the IoT control subsystem 106 is shown comprising a client-side control device 108 (e.g., IoT hub) and a server-side control platform 110, interconnected with each other by a LAN (and/or wireless mesh network) 112 and a WAN 114 such as the internet. Further, in the example implementation, the user has a smartphone 116, and the IoT control subsystem 106 includes or is otherwise in communication with an associated IoT control app 118 running on the user's smartphone 116.

The IoT devices 102 in the user's IoT ecosystem could be any IoT devices, such as but not limited to any of the examples noted above, which may be configured to operate according to a common IoT framework and to communicate wirelessly with each other and with the IoT control subsystem 106, e.g., using Wi-Fi, Bluetooth, or another agreed wireless communication protocol, through wireless mesh networking and/or through an access point for instance.

Each IoT device may have associated properties. For instance, each IoT device may have a device type (e.g., light, fan, window shade, power outlet, motion sensor, etc.) Further, each device may have a unique identifier, such as a Media Access Control (MAC) address for instance, which may correlate with the device's manufacturer and type. Still further, each device may have an operational state, such as its current settings, readings, location, and/or the like. Each device may also have a device name by which the user may refer to the device, possibly a name that correlates the device's type with an assigned location of the device (e.g., a given room of the user's home) (e.g., "foyer light", "kitchen light", "mudroom motion sensor", etc.)

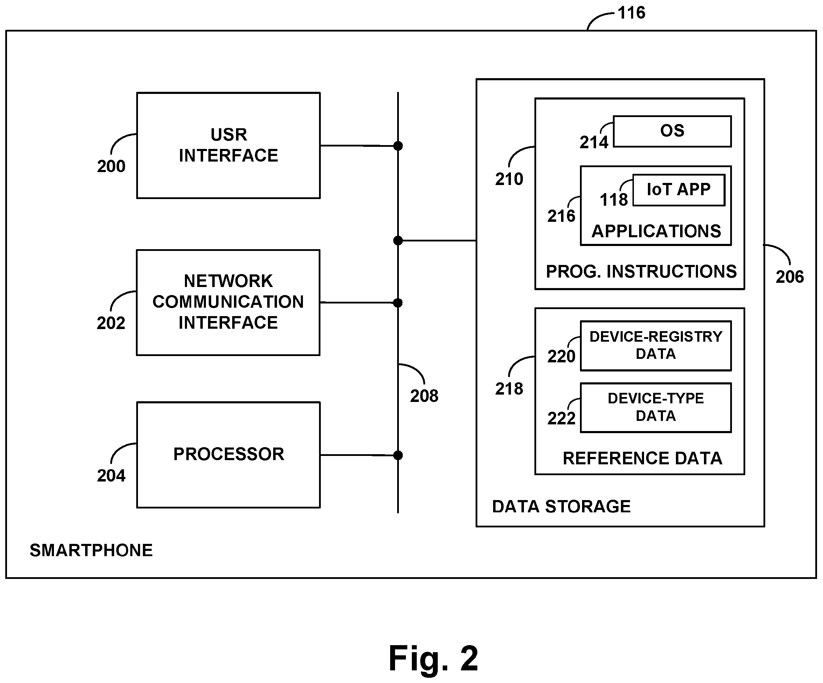

Figure 2 is a simplified block diagram of the user's smartphone 116 as a nonlimiting example of an IoT control device running an IoT control app. As shown in Figure 2, the smartphone 116 includes at least one user interface 200, at least one network communication interface 202, at least one processor 204, and non-transitory data storage 206, which may be integrated together and/or communicatively linked by a system bus, network, or other connection mechanism 208.

The at least one user interface 200 may facilitate user interaction. Thus, the user interface 200 may include user output components such as a display screen, sound speaker, and haptic interface, and user input components, such as a touch panel, keyboard, and microphone. In an example implementation, the at least one user interface 200 takes the form of a touch-sensitive display screen and associated control logic to support graphical user interface (GUI) interaction.

The at least one network communication interface 202 may facilitate network communication, possibly both locally with other devices via a LAN or wireless mesh network and/or remotely with other systems, such as the server-side control platform 110 for instance. As such, the at least one network communication interface 202 may include wired and/or wireless networking components such as a wired Ethernet port and Wi-Fi, Bluetooth, cellular, and/or other wireless network interfaces along with supporting control logic.

The at least one processor 204 could comprise one or more general purpose processors (e.g., microprocessors) and/or one or more special-purpose processors (e.g., digital signal processors (DSPs), graphic processing units (GPUs), neural processing units (NPUs), etc.) Further, the non-transitory data storage 206 could comprise one or more volatile and/or non-volatile storage components such as optical, magnetic, or flash storage, RAM, ROM, EPROM, EEPROM, cache memory, and/or one or more other instances of computer-readable media, etc.

As shown, the non-transitory data storage 206 holds program instructions 210 and reference data 212. The program instructions 210 could be executable by the at least one processor 204 to carry out various operations described herein and, as illustrated, may include an operating system 214 and applications 216 configured to run on the operating system 214. Further, the reference data 212 includes data useable by the application 216 to facilitate carrying out various application operations.

For present purposes, one of the applications 216 in the non-transitory data storage 206 is shown as the IoT control app 118 noted above, and the reference data 212 is shown including example associated IoT-control-app reference data 218, namely, device-registry data 220 and device-type data 222. The IoT control app 118 may be provisioned with this IoT-control-app reference data 218 to facilitate supporting IoT device control.

Provisioning of the IoT control app 118 with this IoT-control-app reference data 218 may involve loading the IoT-control-app reference data 218 into the data storage 206 of the smartphone 116 in a manner that is consistent with and facilitates operation of the IoT control app 118. By way of example, the IoT control app 118 may expect that the IoT-control-app reference data 218 has a particular structure, such as one or more particularly arranged and possibly interrelated tables, markup documents, or the like, so provisioning the IoT control app 118 with the IoT-control-app reference data 218 may include storing the IoT-control-app reference data 218 with this expected structure in the data storage 206. Further, provisioning the IoT control app 118 with this data may involve providing the data to the IoT control app 118 and having the IoT control app 118 store the data with the expected structure, among other possibilities.

In line with the discussion above, the device-registry data 220 may identify the devices 102 within the user's IoT ecosystem and may specify for each device a set of associated metadata, such as device type and operational state (e.g., current on/off status, level, location, etc.) This device-registry data 220 may be synchronized with corresponding device-registry data maintained in the client-side control device 108 and in the server-side control platform 110. For instance, when the device-registry data 220 changes at one of these entities, the entity may multicast or otherwise communicate the change to the other entities to facilitate correspondingly updating the device-registry data at the other entities as well. Thus, as the user adds new IoT devices to the user's IoT ecosystem and as the operational states of the user's IoT devices change, the device registry may get updated at each of these entities.

The device-type data 222 may include definitions of various UI elements and associated control logic information respectively for each of various IoT device types, to enable the IoT control app 118 to support controlling of devices of those types. In line with the discussion above, for instance, this may include respectively for each device type (i) a virtual representation of the device type, such as an icon (e.g., an image file representing an icon), (ii) virtual representations of various operational states supported by the device type, and (iii) control logic, such as state logic governing control flow per device type, among other possibilities.

Example state logic for a given device type may be a logical construct that defines control flow for any IoT device of that type, such as what UI elements the IoT control app 118 should present at what times in relation to user interaction with the IoT control app 118 and in relation to operational device state, what functions may be defined with respect to particular UI elements and what interaction may occur respect to other aspects of the IoT control subsystem 106, and so forth.

For instance, for the device type "light", example state logic may indicate that the IoT control app 118 should present graphical representations of a lightbulb and slider controls for controlling brightness and color, with current settings shown for an IoT light at issue. Further, the state logic may indicate that if and when the IoT control app 118 receives user input sliding either of those controls to change light setting of the IoT light at issue, the IoT control app 118 should responsively (i) send control signaling accordingly to the IoT light and/or to another aspect of the IoT control subsystem 106 to facilitate controlling the IoT light, (ii) change the UI in a defined manner to show that the setting change is pending, (iii) receive response signaling indicating that the setting change has occurred, (iv) change the UI to show the new setting in effect, and (v) update the device-registry data 220 accordingly.

The IoT-control-app reference data 218 could be stored in the data storage 206 in a manner that interrelates the device-registry data 220 with the device-type data 222. For instance, for each IoT device 102 in the user's IoT ecosystem, a record in the device-registry data 220 may identify the IoT device 102 and specify its device type, and that specification of device type may refer to a device-type record in the device-type data 222, thereby defining applicable UI elements and associated control logic information for the IoT device 102.

In line with the discussion above, the IoT control app 118 may be configured by default or initially to support controlling just certain types of IoT devices. However, as presently contemplated, the IoT control app 118 could be dynamically configured to support newly added device types as well.

To appreciate this process, consider an example scenario where a manufacturer of a barbecue gas grill produces a new IoT-equipped grill that is compliant with the IoT framework of a user's IoT ecosystem and has properties such as (i) burner level, (ii) grill temperature, (iii) target grill temperature, (iv) food temperature, (v) target food temperature, and (vi) gas supply level. Further, assume that the user acquires this new grill and seeks to add the grill to the user's IoT ecosystem and to be able to control the grill using the IoT control app 118. However, assume that, while the IoT control app 118 is currently configured to support controlling various types of IoT devices, the IoT control app 118 is not currently configured to support controlling an IoT grill. For instance, the device-type data 222 may not include the grill device type and may therefore not currently define a set of UI elements and associated logic that would enable the IoT control app 118 to engage in control interaction with such a device.

In an example implementation, when the user acquires this new grill, the user may invoke a registration process to add the grill to the user's IoT ecosystem as a new IoT device 102 that the user can control using the IoT control app 118.

This registration process may involve a computing system determining an identifier and device type of the new IoT device. Further, the registration process may involve determining whether the IoT control app 118 is already provisioned to support controlling the determined device type and, in response to determining that the IoT control app 118 is not currently configured to support controlling the determined device type, then triggering a process to provision the IoT control app 118 to support controlling the determined device type.

Without limitation, an example of this process may initially involve determining a device type of the new IoT device. This device type information may come from scanning a QR code associated with the grill, image scanning and recognizing the grill as being a grill, and/or natural language input by the user.

For instance, the grill may come with a QR code that encodes its device type as being the grill device type, and the IoT control app 118 may respond to user input by using a camera function of the smartphone 116 to scan that QR code so as to determine this device type. Or the QR code may encode an identifier of the grill such as a MAC address of the grill, and the IoT control app 118 may scan the QR code to determine that identifier and may then query a web server or other entity to map the determined identifier to the grill device type. Alternatively, the IoT control app 118 may respond to user input by using the smartphone camera to scan an image of the grill itself and may transmit the scanned image to an image-recognition server to determine that the image represents a grill (or could recognize the image itself using a trained machine-learning model on the smartphone 116 without interacting with a server and possibly without even being online), thereby establishing that the new IoT device is the grill device type. Still alternatively, the IoT control app 118 may receive natural language speech input by the user expressing that the new device is a grill, and the IoT control app 118 may transmit a data representation of that natural language speech input to a speech-recognition server to determine that the new device is a grill (or may likewise engage in this speech recognition locally), thereby establishing that the new IoT device is the grill device type.

As part of this process of determining the device type, or separately, the IoT control app 118 may also determine an identifier of the new grill such as a MAC address of the grill, to facilitate control interaction with the grill. For instance, as noted, the IoT control app 118 may determine this identifier by scanning a QR code associated with the grill. Alternatively, the IoT control app 118 may engage in a network discovery process to discover presence of the grill. For instance, when IoT circuitry in the new grill is powered on, the grill may wirelessly broadcast a predefined signal indicating its presence and identifier, and the IoT control app 118 may scan for and read that broadcast to detect presence of the grill and to determine the identifier of the grill.

Having determined that the new IoT device is the grill device type, the IoT control app 118 may then determine whether the IoT control app 118 is currently configured to support controlling that particular type of device. To do so, for instance, the IoT control app 118 may refer to the device-type data 222 to determine whether the device-type data 222 includes the grill device type. As the device-type data 222 does not include the grill device type, the IoT control app 118 may thus determine that the IoT control app 118 is not currently configured to support controlling that type of device. Therefore, the IoT control app 118 may responsively work to become provisioned to support controlling the new grill device type.

To become provisioned to support controlling the new grill device type, the IoT control app 118 may invoke a process that involves determining properties of the grill device type and obtaining UI elements and associated control logic corresponding with the determined properties. The IoT control app 118 may then store UI elements and associated control logic in association with the grill device type in the device-type data 222, thereby facilitating use of the UI elements and associated control logic to support controlling of the grill.

In an example implementation, the IoT control app 118 may query one or more of the network provisioning servers 120 to facilitate this. For instance, the IoT control app 118 may first query a server to map the grill device type to a set of properties of the grill device type, such as the properties described above for instance, and the IoT control app 118 may then query another server to map those properties of the grill device type to UI elements and associated control logic. Alternatively, the IoT control app 118 may query a single server that may similarly or more directly map the grill device type to UI elements and associated control logic. Through this querying, the IoT control app 118 may receive from such a server a transmission of data defining the UI elements and associated control logic.

To facilitate this implementation, an IoT service provider may operate one or more network provisioning servers 120 possibly as part of the server-side control platform 110 as shown in Figure 1, and the one or more network servers 120 may be provisioned with data that maps the grill device type to the UI elements and associated control logic, possibly data that maps the grill device type to the associated set of properties and that maps those properties to the UI elements and associated control logic. For instance, when the grill manufacturer introduces the new IoT grill, the grill manufacturer may supply the IoT service provider with the set of properties, and the IoT service provider may provision the server(s) 120 to map the grill device type to those properties and to corresponding UI elements and associated control logic.

In practice one of more of these servers 120 may apply any of various processes to map the grill device type properties to a corresponding set of UI elements and associated control logic. For instance, a server 120 may map the properties to the UI elements and associated control logic by finding that the properties are similar to properties of another device type that is already mapped to particular UI elements and associated control logic. Alternatively, the grill manufacturer may supply the IoT service provider with a definition of the UI elements and associated control logic.

Further, note that the act of an IoT control app 118 mapping device type to UI elements may involve the IoT control app 118 mapping the device type to UI heuristics (e.g., mapping device type to properties, and mapping properties to UI heuristics), and then mapping the UI heuristics to specific UI elements. That way, it may be the case that two versions of the IoT app 118 running on different devices may map the same device type to different UI elements than each other.

In another implementation, the IoT control app 118 may engage in a network discovery process like that noted above, to learn the properties of the grill device type and possibly to obtain the UI elements and associated control logic. For instance, when IoT circuitry in the new grill is powered on, the grill may wirelessly broadcast a predefined signal indicating its presence, and the IoT control app 118 may scan for and read that broadcast to detect presence of the grill. Through further network signaling between the IoT control app 118 and the detected grill, the grill may then provide the IoT control app 118 with the set of properties of the grill device type, and the IoT control app 118 may then query a network server to map those properties to the UI elements and associated control logic. Alternatively, the grill itself may thereby transmit to the IoT device the data defining the UI elements and associated control logic.

In a particular implementation, the IoT control app 118 could first attempt to obtain the grill device properties from a network server 120 and, upon failing to do so, could then engage in the network discovery process to try to get the properties from the grill itself, among other possibilities.

With the example grill properties noted above, potential mapping of properties to UI elements and associated control logic could include (a) mapping the burner level, grill temperature, food temperature, and gas supply level to respective level-meter UI elements, which could graphically depict the level of each such metric, and (b) mapping the target grill temperature and target food temperature to respective slider UI elements, which could facilitate user setting of the target temperatures, among other possibilities.

As noted above, the data defining the UI elements and associated control logic may comprise a structured markup document such as a JSON document, among other possibilities. An example JSON document could define certain UI elements semantically, e.g., with component descriptions that the IoT control app 118 could instantiate as specific UI elements. Examples of semantic component descriptions could include "toggle switch", "slider", "meter", "button", and so forth. Further, the JSON document could provide links to certain UI elements, to enable the IoT control app 118 to download or otherwise obtain those components. Further, the JSON document could define UI elements in still other ways. The example JSON document could also define associated control logic with a data construct, which could establish state logic as discussed above, among other possibilities.

An example JSON file or other set of structured metadata data for this purpose could define pages, components, and structures, among other information.

Pages could have an explicitly defined navigation stack, with a root structure that controls how the top-level of components would be displayed. Examples of pages could include a main IoT-device list page, a main page for an IoT device, and a main settings page for an IoT device.

Components could be basic building blocks of a UI, which may define a set of inputs and outputs for an IoT device. Further, components may open up a dedicated (e.g., hard coded) UI such as a modal full-screen UI. A light color component, for instance, may have a simple swatch of color displayed, but when a user taps the swatch, may then open a more complicated color wheel that would communicate back to the main UI through reading or writing IoT-device inputs and outputs, and may not changeable on use-by-use basis. The metadata may specify such a component, to facilitate use of that component for user-interaction with an applicable IoT device. Further, a given component may include and/or refer to a bitmap or other graphical representation or other such asset that could be locally cached on the IoT device along with the metadata. Components may also refer to strings such as section names, which may be localizable and cached locally along with the metadata. Examples of components may include an on/off control for a switch, a color-selector for a lightbulb, and a video playback UI for a camera, among other possibilities.

Structures could define relationships between components. Structure definitions may include relationships and containment and high-level behavior. A given structure implementation may also define layout information, such as column, row, or grid layout of components. Structures may provide their containing components or structures with the space they will occupy, such as by recursively evaluating other structures, for purposes of layout. Examples of structures may include a group of components (perhaps with a section name), a group of controls that only appear when a specific control has or indicates a specific operational state or value, and an array of referred-to controls, among other possibilities. A structure may be an invisible container of other components (child components) or other structures, e.g., linear, nested, or modal, among other possibilities.

In an example implementation, a JSON file or other set of metadata that the IoT control app would acquire could thus describe one or more UI pages specific to the newly introduced IoT device, such as a home page and device-overview page, each of which may have associated content that references components and structures supporting the page and thus supporting interaction with the IoT device. The metadata might include no layout information, as layout may be dynamically created by the structure - with different structures laying out components differently than each other using associated display configuration information for instance.

When onboarding a new IoT device and/or creating a new set of UI elements, it may be worthwhile to refer to an existing toolbox of structures and components. Such a toolbox may include basic components, basic structures, and domain component or structures (e.g., components that are specific to the IoT device and perhaps not found in other UI toolkits, such as for an IoT device that does something unique).

In an alternative implementation, the process of adding a new IoT device to the user's IoT ecosystem could be carried out by or in cooperation with one or more other entities of the IoT control subsystem 106. For instance, a user may interact with an entity such as the client-side control device 108 and/or the server-side control platform 110, to request addition of a new type of IoT device to the user's IoT ecosystem. Through signaling with the IoT control app 118 or in another manner, that other entity could then determine that the IoT control app 118 is not currently configured to support controlling that new type of IoT device and may then responsively engage in a process to cause the IoT control app 118 to become provisioned to support that control.

More generally, these or related operations could be carried out by a computing system, which may be at least part of the IoT control subsystem 106. For instance, the computing system may be provided at the user's home 104 as or at the client-side control device 108 and/or the user's smartphone 116, and/or in the server-side control platform 110, among other possibilities.

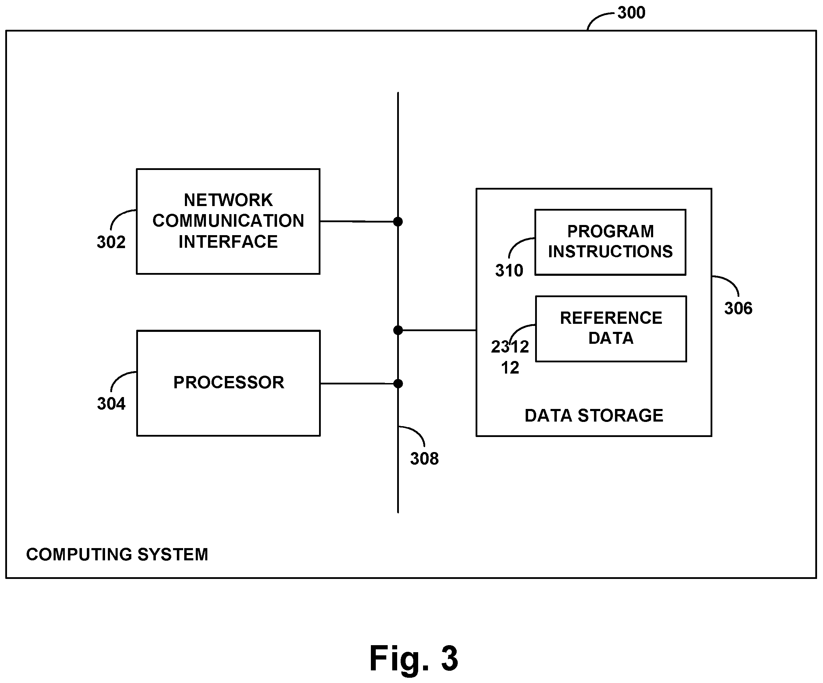

Figure 3 is a simplified block diagram depicting an example of such a computing system 300. As shown in Figure 3, the example computing system includes at least one network communication interface 302, at least one processor 304, and non-transitory data storage 306, which could be integrated together and/or communicatively linked with each other by a system bus or other connection mechanism 308.

The at least one network communication interface 302 could comprise one or more components that would enable the computing system to engage in ad hoc or other network communication with one or more other components of the system. For instance, the network communication interface 302 could comprise a wired network interface module such as an Ethernet module and/or a wireless communication interface such as a Wi-Fi, Bluetooth, cellular, or other interface, among other possibilities.

The at least one processor 304 could comprise one or more general purpose processors (e.g., microprocessors) and/or one or more special-purpose processors (e.g., DSPs, GPUs, NPUs, etc.) Further, the non-transitory data storage 306 could comprise one or more volatile and/or non-volatile storage components such as optical, magnetic, or flash storage, RAM, ROM, EPROM, EEPROM, cache memory, and/or one or more other instances of computer-readable media, etc. Still further, the non-transitory data storage 306 could hold program instructions 310 and reference data 312. The program instructions 310 could be executable by the at least one processor 304 to carry out various operations described herein, making use of the reference data 312.

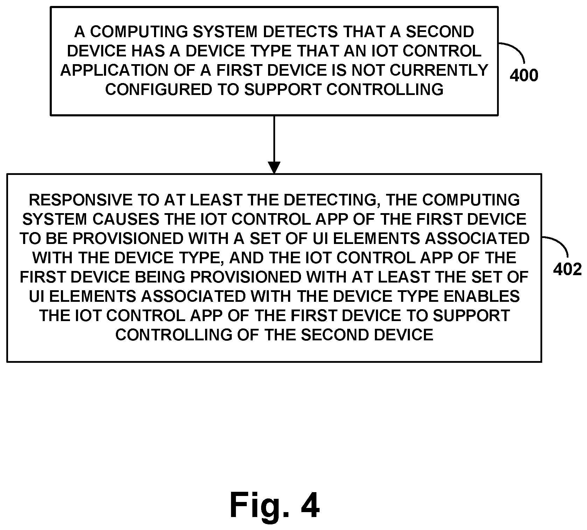

Figure 4 is next a flow chart illustrating a method that could be carried out in accordance with the present disclosure, for dynamically configuring an IoT control app of a first device to support controlling of a second device. As shown in Figure 4, at block 400, the method could include a computing system detecting that the second device has a device type that the IoT control application of the first device is not currently configured to support controlling. Further, at block 402, the method could include, responsive to at least the detecting, the computing system causing the IoT control app of the first device to be provisioned with a set of UI elements associated with the device type. The IoT control app of the first device being provisioned with at least the set of UI elements associated with the device type would then enable the IoT control app of the first device to support controlling of the second device.

In line with the discussion above, the IoT control app in this method is configured to control an IoT ecosystem, and the method could additionally include receiving a request to add the second device to the IoT ecosystem, in which case the detecting and responsive causing could be cooperatively responsive to at least the receiving the request to add the second device to the IoT ecosystem.

Further, the method could additionally involve the computing system determining an identifier of the second device (e.g., based on scanning of a QR code associated with the second device, recognizing an image of the second device, and/or natural language input describing the second device) and mapping the determined identifier of the second device to the device type, in which case the detecting that the second device has the device type that the IoT control app of the first device is not currently configured to support controlling could be based on the mapping.

Still further, the act of causing the IoT control application of the first device to be provisioned with the set of UI elements associated with the device type could involve mapping the device type to the set of UI elements and then, based on the mapping, provisioning the first device with data defining the set of UI elements. Further, mapping the device type to the set of UI elements could involve mapping the device type to a set of device properties and then mapping the set of device properties to the set of UI elements.

In addition, the method could involve using a network discovery process to discover properties of the second device, and mapping the discovered properties of the second device to the set of UI elements associated with the device type, as a basis for the causing of the IoT control application of the first device to be provisioned with the set of UI elements.

Further, the set of UI elements could include one or more GUI objects, in which case causing the IoT control app of the first device to be provisioned with the set of UI elements could involve provisioning the first device with a semantic definition of each of the one or more GUI objects, where the first device is configured to translate the semantic definition of each GUI object into the GUI object for use by the IoT control app.

Still further, the method could include, responsive to at least the detecting that the IoT control app is not currently configured to support controlling the device type of the second device, the method could also include the computing system the computing system causing the IoT control application of the first device to be provisioned with a set of control logic for controlling state of the UI elements in relation to state of control of the second device.

In addition, the act of causing the IoT control application of the first device to be provisioned with the set of UI elements could involve provisioning the IoT control app of the first device with a structured markup document defining the set of UI elements. For instance, this could involve provisioning the IoT control app with a JSON document defining the set of UI elements. Further, as noted above, the structured markup document may exclude layout information for the UI elements.

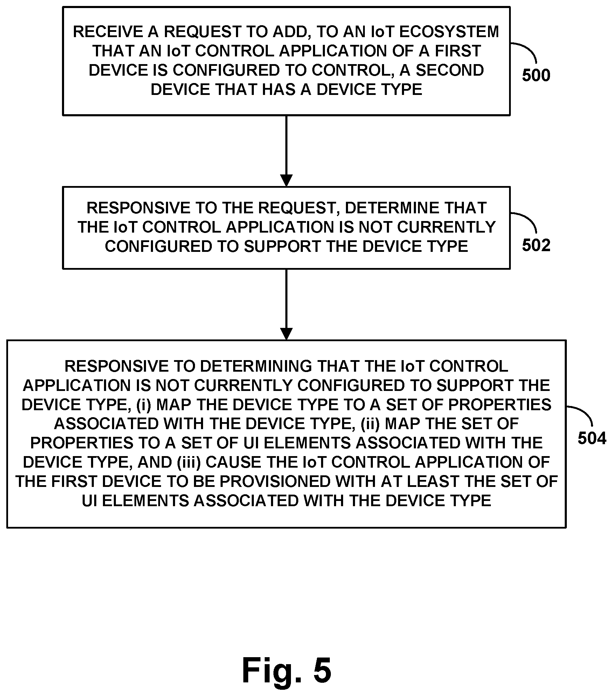

Figure 5 is another flow chart illustrating a method that could be carried out in accordance with the present disclosure, for dynamically configuring an IoT control app of a first device to support controlling of a second device. This method may similarly be carried out by the example computing system. As shown in Figure 5, at block 500, the method could include receiving a request to add, to an IoT ecosystem that an IoT control application of a first device is configured to control, a second device that has a device type. At block 502, the method could then include, responsive to the request, determining that the IoT control application is not currently configured to support the device type. At block 504, the method could then include, responsive to determining that the IoT control application is not currently configured to support the device type, (i) mapping the device type to a set of properties associated with the device type, (ii) mapping the set of properties to a set of UI elements associated with the device type, and (iii) causing the IoT control application of the first device to be provisioned with at least the set of UI elements associated with the device type. Causing the IoT control application of the first device to be provisioned with at least the set of UI elements could thereby enable the IoT control application of the first device to support controlling of the second device.

In line with the discussion above, the present disclosure also contemplates a computing system configured to carry out these or other operations. Further, the disclosure contemplates a non-transitory data storage in the form of at least one non-transitory computer-readable medium encoded with, embodying, or otherwise storing program instructions executable by at least one processor to carry out various operations as described herein.

Exemplary embodiments have been described above. Those skilled in the art will understand, however, that changes and modifications may be made to these embodiments without departing from the true scope and spirit of the invention.

### Clauses:

1. A method for dynamically configuring an Internet of Things (IoT) control application of a first device to support controlling of a second device, the method comprising:
   detecting by a computing system that the second device has a device type that the IoT control application of the first device is not currently configured to support controlling; and
   responsive to at least the detecting, causing by the computing system the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.
2. The method of clause 1, wherein the IoT control application is configured to control an IoT ecosystem, and wherein the method further comprises:
   receiving a request to add the second device to the IoT ecosystem, wherein the detecting and responsive causing are cooperatively responsive to at least the receiving the request to add the second device to the IoT ecosystem.
3. The method of clause 1, further comprising:
   determining by the computing system an identifier of the second device; and
   mapping by the computing system the determined identifier of the second device to the device type,
   wherein the detecting that the second device has the device type that the IoT control application of the first device is not currently configured to support controlling is based on the mapping.
4. The method of clause 3, wherein the determining of the identifier of the second device is based on an action selected from the group consisting of (i) scanning of a Quick-Response (QR) code associated with the second device, (ii) recognizing an image of the second device, and (iii) natural language input describing the second device.
5. The method of clause 1, wherein causing the IoT control application of the first device to be provisioned with the set of UI elements associated with the device type comprises:
   mapping the device type to the set of UI elements; and
   based on the mapping, provisioning the first device with data defining the set of UI elements.
6. The method of clause 5, wherein mapping the device type to the set of UI elements comprises:
   mapping the device type to a set of device properties and then mapping the set of device properties to the set of UI elements.
7. The method of clause 1, further comprising:
   using a network discovery process to discover properties of the second device; and
   mapping the discovered properties of the second device to the set of UI elements associated with the device type, as a basis for the causing of the IoT control application of the first device to be provisioned with the set of UI elements.
8. The method of clause 1, wherein the set of UI elements comprises one or more graphical user interface (GUI) objects, wherein causing the IoT control application of the first device to be provisioned with the set of UI elements comprises provisioning the first device with a semantic definition of each of the one or more GUI objects, wherein the first device is configured to translate the semantic definition of each GUI object into the GUI object.
9. The method of clause 1, further comprising:
   responsive to at least the detecting, causing by the computing system the IoT control application of the first device to be provisioned with a set of control logic for controlling state of the UI elements in relation to state of control of the second device.
10. The method of clause 1, wherein causing the IoT control application of the first device to be provisioned with the set of UI elements comprises provisioning the IoT control application of the first device with a structured markup document defining the set of UI elements.
11. The method of clause 10, wherein the structured markup document comprises a JavaScript Object Notation (JSON) document.
12. The method of clause 10, wherein the structured markup document excludes layout information for the UI elements.
13. A computing system comprising:
   at least one network communication interface;
   at least one processor;
   non-transitory data storage; and
   program instructions stored in the non-transitory data storage and executable by the at least one processor to carry out operations for dynamically configuring an Internet of Things (IoT) control application of a first device to support controlling of a second device, the operations including:
      detecting that the second device has a device type that the IoT control application of the first device is not currently configured to support controlling, and
      responsive to at least the detecting, causing the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.
14. The computing system of clause 13, wherein the IoT control application is configured to control an IoT ecosystem, and wherein the operations further include:
   receiving a request to add the second device to the IoT ecosystem, wherein the detecting and responsive causing are cooperatively responsive to at least the receiving the request to add the second device to the IoT ecosystem.
15. The computing system of clause 13, wherein the operations further include:
   determining an identifier of the second device; and
   mapping the determined identifier of the second device to the device type,
   wherein the detecting that the second device has the device type that the IoT control application of the first device is not currently configured to support controlling is based on the mapping.
16. The computing system of clause 15, wherein the determining of the identifier of the second device is based on an action selected from the group consisting of (i) scanning of a Quick-Response (QR) code associated with the second device, (ii) recognizing an image of the second device, and (iii) natural language input describing the second device.
17. The computing system of clause 13, wherein causing the IoT control application of the first device to be provisioned with the set of UI elements associated with the device type comprises:
   mapping the device type to the set of UI elements; and
   based on the mapping, provisioning the first device with data defining the set of UI elements.
18. The computing system of clause 13, wherein the operations further include:
   using a network discovery process to discover properties of the second device; and
   mapping the discovered properties of the second device to the set of UI elements associated with the device type, as a basis for the causing of the IoT control application of the first device to be provisioned with the set of UI elements.
19. The computing system of clause 1, wherein the set of UI elements comprises one or more graphical user interface (GUI) objects, wherein causing the IoT control application of the first device to be provisioned with the set of UI elements comprises provisioning the first device with a semantic definition of each of the one or more GUI objects, wherein the first device is configured to translate the semantic definition of each GUI object into the GUI object.
20. Non-transitory data storage having stored program instructions executable by at least one processor to carry out operations for dynamically configuring an Internet of Things (IoT) control application of a first device to support controlling of a second device, the operations comprising:
   detecting that the second device has a device type that the IoT control application of the first device is not currently configured to support controlling; and
   responsive to at least the detecting, causing the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.

## Claims

1. A method for dynamically configuring an Internet of Things (IoT) control application of a first device to support controlling of a second device, the method comprising:
detecting by a computing system that the second device has a device type that the IoT control application of the first device is not currently configured to support controlling; and
responsive to at least the detecting, causing by the computing system the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.

2. The method of claim 1, wherein the IoT control application is configured to control an IoT ecosystem, and wherein the method further comprises:
receiving a request to add the second device to the IoT ecosystem, wherein the detecting and responsive causing are cooperatively responsive to at least the receiving the request to add the second device to the IoT ecosystem.

3. The method of any preceding claim, further comprising:
determining by the computing system an identifier of the second device; and
mapping by the computing system the determined identifier of the second device to the device type,
wherein the detecting that the second device has the device type that the IoT control application of the first device is not currently configured to support controlling is based on the mapping.

4. The method of claim 3, wherein the determining of the identifier of the second device is based on an action selected from the group consisting of (i) scanning of a Quick-Response (QR) code associated with the second device, (ii) recognizing an image of the second device, and (iii) natural language input describing the second device.

5. The method of any preceding claim, wherein causing the IoT control application of the first device to be provisioned with the set of UI elements associated with the device type comprises:
mapping the device type to the set of UI elements; and
based on the mapping, provisioning the first device with data defining the set of UI elements.

6. The method of claim 5, wherein mapping the device type to the set of UI elements comprises:
mapping the device type to a set of device properties and then mapping the set of device properties to the set of UI elements.

7. The method of any preceding claim, further comprising:
using a network discovery process to discover properties of the second device; and
mapping the discovered properties of the second device to the set of UI elements associated with the device type, as a basis for the causing of the IoT control application of the first device to be provisioned with the set of UI elements.

8. The method of any preceding claim, wherein the set of UI elements comprises one or more graphical user interface (GUI) objects, wherein causing the IoT control application of the first device to be provisioned with the set of UI elements comprises provisioning the first device with a semantic definition of each of the one or more GUI objects, wherein the first device is configured to translate the semantic definition of each GUI object into the GUI object.

9. The method of any preceding claim, further comprising:
responsive to at least the detecting, causing by the computing system the IoT control application of the first device to be provisioned with a set of control logic for controlling state of the UI elements in relation to state of control of the second device.

10. The method of any preceding claim, wherein causing the IoT control application of the first device to be provisioned with the set of UI elements comprises provisioning the IoT control application of the first device with a structured markup document defining the set of UI elements.

11. The method of claim 10, wherein the structured markup document comprises a JavaScript Object Notation (JSON) document.

12. The method of claim 10, wherein the structured markup document excludes layout information for the UI elements.

13. A computing system comprising:
at least one network communication interface;
at least one processor;
non-transitory data storage; and
program instructions stored in the non-transitory data storage and executable by the at least one processor to carry out operations for dynamically configuring an Internet of Things (IoT) control application of a first device to support controlling of a second device, the operations including:
detecting that the second device has a device type that the IoT control application of the first device is not currently configured to support controlling, and
responsive to at least the detecting, causing the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.

14. The computing system of claim 13, wherein:
the IoT control application is configured to control an IoT ecosystem, and wherein the operations further include:
receiving a request to add the second device to the IoT ecosystem, wherein the detecting and responsive causing are cooperatively responsive to at least the receiving the request to add the second device to the IoT ecosystem;
and/or
the operations further include:
determining an identifier of the second device; and
mapping the determined identifier of the second device to the device type,
wherein the detecting that the second device has the device type that the IoT control application of the first device is not currently configured to support controlling is based on the mapping and optionally wherein the determining of the identifier of the second device is based on an action selected from the group consisting of (i) scanning of a Quick-Response (QR) code associated with the second device, (ii) recognizing an image of the second device, and (iii) natural language input describing the second device;
and/or
causing the IoT control application of the first device to be provisioned with the set of UI elements associated with the device type comprises:
mapping the device type to the set of UI elements; and
based on the mapping, provisioning the first device with data defining the set of UI elements;
and/or
the operations further include:
using a network discovery process to discover properties of the second device; and
mapping the discovered properties of the second device to the set of UI elements associated with the device type, as a basis for the causing of the IoT control application of the first device to be provisioned with the set of UI elements;
and/or
wherein the set of UI elements comprises one or more graphical user interface (GUI) objects, wherein causing the IoT control application of the first device to be provisioned with the set of UI elements comprises provisioning the first device with a semantic definition of each of the one or more GUI objects, wherein the first device is configured to translate the semantic definition of each GUI object into the GUI object.

15. Non-transitory data storage having stored program instructions executable by at least one processor to carry out operations for dynamically configuring an Internet of Things (IoT) control application of a first device to support controlling of a second device, the operations comprising:
detecting that the second device has a device type that the IoT control application of the first device is not currently configured to support controlling; and
responsive to at least the detecting, causing the IoT control application of the first device to be provisioned with a set of user interface (UI) elements associated with the device type, wherein the IoT control application of the first device being provisioned with at least the set of UI elements associated with the device type enables the IoT control application of the first device to support controlling of the second device.
